# EUROPEAN PATENT APPLICATION

(11) **EP 4 492 554 A1**
(43) Date of publication of application: **15.01.2025**
(21) Application number: 23901023.4
(22) Date of filing: 04.12.2023
(51) Int. Cl.: H01M 50/291, H01M 10/658, H01M 50/204, H01M 50/242, H01M 50/264

(54) **BATTERY PACK**

(30) Priority: 05.12.2022 KR 20220168184; 07.03.2023 KR 20230029863
(71) Applicant: LG Energy Solution, Ltd., Seoul 07335 (KR)
(72) Inventor: SHIN, Ju Hwan, Daejeon 34122 (KR); LEE, Hyoung Suk, Daejeon 34122 (KR); HUR, Nam Hoon, Daejeon 34122 (KR)
(74) Representative: Plasseraud IP
(86) International application number: PCT/KR2023/019763
(87) International publication number: WO 2024/123004

(57) **Abstract**

Provided is a battery pack according to example embodiments of the present technology. The battery pack includes a housing with a plate part, and first and second battery assemblies provided on an upper surface of the plate part of the housing and including a plurality of battery cells, in which each of the first and second battery assemblies includes a cell stack and first and second cross-beams spaced apart from each other with the cell stack interposed therebetween, a shape of the first cross-beam of the second battery assembly is different from and complementary to a shape of the second cross-beam of the first battery assembly, the first cross-beam of the second battery assembly faces the second cross-beam of the first battery assembly, and the first cross-beam of the second battery assembly is spaced apart from the second cross-beam of the first battery assembly.

## Description

### [Technical Field]

The present invention relates to a battery pack. The present application claims the benefit of priority based on Korean Patent Application No. 10-2022-0168184, filed on December 5, 2022 and Korean Patent Application No. 10-2023-0029863, filed on March 7, 2023, and the entire contents of the Korean patent applications are incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A trend in the development of technology for secondary batteries for mobility is an improvement in energy density and safety. Here, the energy density of a secondary battery is a value obtained by dividing a maximum level of electrical energy that the secondary battery may store by the mass of the secondary battery. A high energy density of the secondary battery is directly related to the driving efficiency and range of mobility, and thus various studies are being conducted to improve the energy density of secondary batteries.

### [Disclosure]

### [Technical Problem]

The present invention is directed to providing a battery pack with improved energy density.

### [Technical Solution]

To address the above-described problem, example embodiments of the present invention provide a battery pack. The battery pack includes a housing with a plate part, and first and second battery assemblies provided on an upper surface of the plate part of the housing and including a plurality of battery cells, in which each of the first and second battery assemblies includes a cell stack and first and second cross-beams spaced apart from each other with the cell stack interposed therebetween, a shape of the first cross-beam of the second battery assembly is different from and complementary to a shape of the second cross-beam of the first battery assembly, the first cross-beam of the second battery assembly faces the second cross-beam of the first battery assembly, and the first cross-beam of the second battery assembly is spaced apart from the second cross-beam of the first battery assembly.

The battery pack may further include a heat insulator between the first cross-beam of the second battery assembly and the second cross-beam of the first battery assembly.

There may be an air gap between the first cross-beam of the second battery assembly and the second cross-beam of the first battery assembly.

The first cross-beam of each of the first and second battery assemblies may include a first plate covering a first side of the cell stack, a second plate spaced apart from the cell stack with the first plate interposed therebetween, and first and second ribs respectively coupled to the first and second plates and interposed between the first and second plates.

The second cross-beam of each of the first and second battery assemblies may include a third plate covering a second side of the cell stack, wherein the second side is opposite to the first side, a fourth plate spaced apart from the cell stack with the third plate interposed therebetween, and third and fourth ribs respectively coupled to the third and fourth plates and interposed between the third and fourth plates.

A thickness of each of the first to fourth plates and the first to fourth ribs may be 10 mm or less.

Each of the first to fourth ribs may include a plurality of slots.

The plurality of slots of each of the first to fourth ribs may overlap each other.

The first battery assembly and the second battery assembly may be spaced apart from each other in a first direction.

A length of the slots in the first direction may be greater than a length thereof in a second direction perpendicular to the first direction.

The battery pack may further include a heat insulator between the first cross-beam of the second battery assembly and the second cross-beam of the first battery assembly.

The heat insulator may be in contact with the first to fourth plates and the second and third ribs.

The battery pack may further include a plurality of fixing devices configured to fix the first cross-beam of the second battery assembly and the second cross-beam of the first battery assembly.

The plurality of fixing devices may pass through the heat insulator.

The battery pack may further include a heat insulator between the first cross-beam of the second battery assembly and the second cross-beam of the first battery assembly.

The heat insulator may be in contact with the second and third plates and be spaced apart from one of the second and third ribs.

There may be an air gap between the first cross-beam of the second battery assembly and the second cross-beam of the first battery assembly.

The battery pack may further include a heat insulator between the first cross-beam of the second battery assembly and the second cross-beam of the first battery assembly, and the heat insulator may be spaced apart from the second or third plate and be in contact with the second and third ribs.

### [Advantageous Effects]

A battery pack according to example embodiments of the present invention includes battery assemblies that include plates and cross-beams including ribs each having a thickness of about 10 mm or less. Accordingly, the energy density of the battery assembly can be improved.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a perspective view for describing a battery pack according to example embodiments.
FIG. 2 is a cross-sectional view taken along line 1I-1I' of FIG. 1.
FIG. 3 is a cross-sectional view of a first cross-beam of FIG. 2.
FIG. 4 is a plan view of the first cross-beam of FIG. 2.
FIG. 5 is a cross-sectional view of a second cross-beam of FIG. 2.
FIG. 6 is a plan view of the second cross-beam of FIG. 2.
FIG. 7 illustrates a part corresponding to FIG. 2.
FIG. 8 illustrates a part corresponding to FIG. 2.
FIG. 9 illustrates a part corresponding to FIG. 2.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

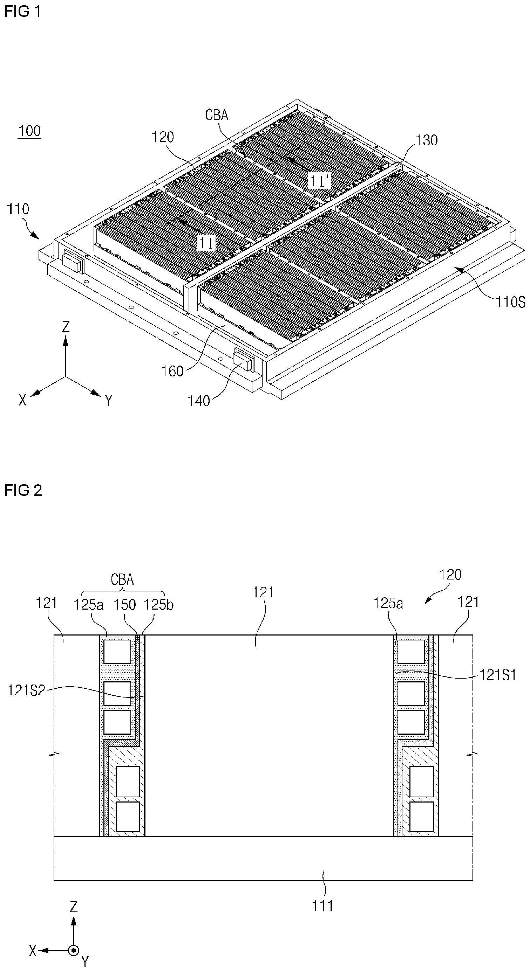

FIG. 1 is a perspective view for describing a battery pack according to example embodiments.

FIG. 2 is a cross-sectional view taken along line 1I-1I' of FIG. 1.

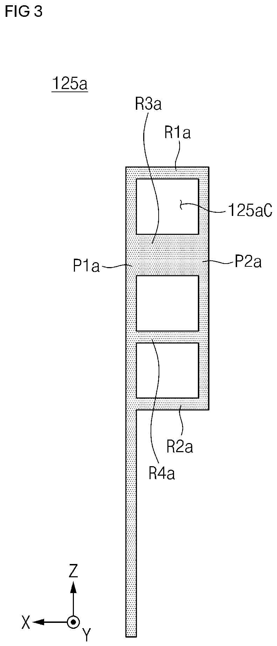

FIG. 3 is a cross-sectional view of a first cross-beam of FIG. 2.

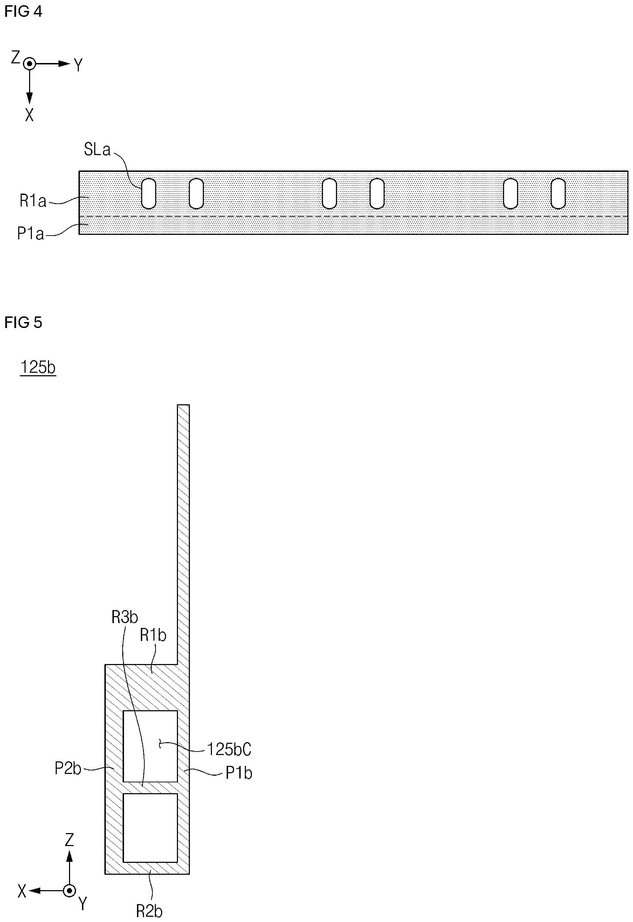

FIG. 4 is a plan view of the first cross-beam of FIG. 2.

FIG. 5 is a cross-sectional view of a second cross-beam of FIG. 2.

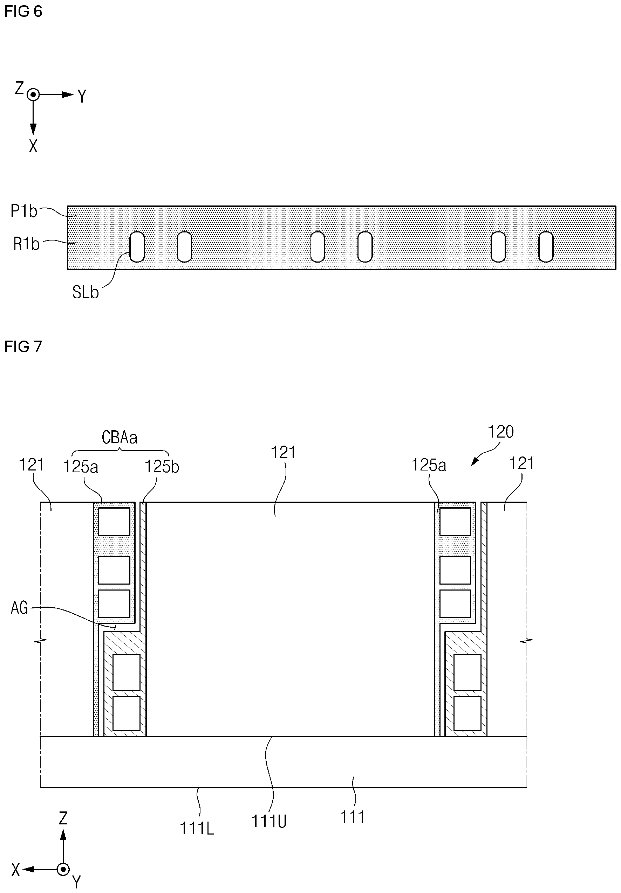

FIG. 6 is a plan view of the second cross-beam of FIG. 2.

Referring to FIGS. 1 to 6, a battery pack 100 may include a housing 110, a plurality of battery assemblies 120, a center beam 130, and a plurality of exhaust devices 140.The battery pack 100 is a final form of a battery system mounted on a mobility or the like.

The housing 110 may provide a space in which the plurality of battery assemblies 120 are arranged. The housing 110 may include a plate part 111 and side walls 110S.

The plate part 111 may include an upper surface 111U and a lower surface 111L that are substantially parallel to each other. Two directions substantially parallel to the upper surface 111U of the plate part 111 are defined as an X-axis direction and a Y-axis direction, and a direction substantially perpendicular to the upper surface 111U of the plate part 111 is defined as a Z-axis direction. The X-axis direction, the Y-axis direction, and the Z-axis direction may be substantially perpendicular to one another. Unless otherwise mentioned, the definition of directions will apply to the following drawings.

According to example embodiments, the plate part 111 may include a plurality of plates welded together by friction stir welding. When the plate part 111 is provided by friction stir welding, the plate part 111 may include a boundary surface between different plates. According to example embodiments, the plate part 111 may be configured as a single plate.

The plate part 111 may include a plurality of cooling channels that are flow paths of a cooling fluid. The plate part 111 may include a plurality of cavities to reduce the weight of the plate part 111.Each of the plurality of cooling channels and the plurality of cavities may extend in the X-axis direction.

The side walls 110S may be coupled to the plate part 111.The side walls 110S may extend in the Z-axis direction. The side walls 110S may each include an inner empty space and may thus be light in weight.

The plurality of battery assemblies 120 may be on the upper surface 111U of the plate part 111.The plate part 111 may support the plurality of battery assemblies 120.First to fourth side walls 110S may horizontally surround the plurality of battery assemblies 120.

Hereinafter, the technical idea of the present invention will be described with reference to an embodiment in which the battery pack 100 is a moduleless type and each of the plurality of battery assemblies 120 does not include a module frame. However, the above description is intended to provide a non-limiting example and thus should not be understood as limiting the technical idea of the present invention in any sense. Those of ordinary skill in the art will be able to easily derive a plurality of battery assemblies including a module frame and a module type battery pack including the same, based on the above description.

Each of the plurality of battery assemblies 120 may include a cell stack 121, a plurality of separators, a first cross-beam 125a, and a second cross-beam 125b.The cell stack 121 may include a plurality of battery cells. Each of the plurality of battery assemblies 120 may further include a bus bar plate.

A battery cell is a basic unit of a lithium ion battery, i.e., a secondary battery. The battery cell includes an electrode assembly, an electrolyte, and a case. Battery cells are classified into a lithium ion battery, a lithium ion polymer battery, a lithium polymer battery, etc. according to a configuration of an electrode assembly and an electrolyte. A market share of lithium ion polymer batteries in the field of secondary battery is increasing due to a low possibility of leakage of an electrolyte and easiness in manufacturing.

A battery cell may be one of a cylindrical battery cell, a prismatic battery cell, and a pouch type battery cell. An electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet.

An electrode assembly included in a battery case includes a positive electrode, a negative electrode, and a separator interposed between the positive electrode and the negative electrode. The electrode assembly may be classified as a jelly-roll type electrode assembly or a stack type electrode assembly according to a form of assembly. The jelly roll type electrode assembly is manufactured by winding a positive electrode, a negative electrode, and a separator interposed therebetween. The stack type electrode assembly includes a plurality of positive electrodes, a plurality of negative electrodes, and a plurality of separators interposed therebetween that are stacked sequentially.

According to example embodiments, the plurality of battery cells of the cell stack 121 may be connected in series and/or in parallel. For example, the plurality of battery cells may be connected to each other in series. As another example, the plurality of battery cells may be connected to each other in parallel. As another example, the cell stack 121 may include a plurality of banks connected to each other in series and in parallel, and each of the plurality of banks may include a plurality of battery cells connected to each other in parallel.

According to example embodiments, the cell stack 121 may further include a plurality of separators. The plurality of separators may horizontally support the plurality of battery cells and may absorb swelling of the plurality of battery cells. According to embodiments, the plurality of separators may be thermal barriers. According to example embodiments, each of the plurality of separators may have a high melting temperature and a low thermal conductivity. According to example embodiments, each of the plurality of separators may include a flame retardant material such as a ceramic and a coated glass material. According to example embodiments, the plurality of separators may be configured to emit a fire retarding material and a fire extinguishing agent when a thermal runaway event occurs.

The first cross-beam 125a and the second cross-beam 125b of each of the plurality of battery assembly 120 may be spaced apart from each other with the cell stack 121 interposed therebetween. The first cross-beam 125a and the second cross-beam 125b may cover the cell stack 121.The first cross-beam 125a and the second cross-beam 125b may be fixed to the cell stack 121 by an adhesive material or the like.

The first cross-beam 125a of each of the plurality of battery assemblies 120 may include plates P1a and P2a and ribs R1a, R2a, R3a and R4a.The plates P1a and P2a may be substantially perpendicular to the X-axis direction. The plates P1a and P2a may be spaced apart from each other in the X-axis direction. The plate P1a may be in contact with the cell stack 121.The plate P1a may cover a first side 121S1 of the cell stack 121.The plate P2a may be spaced apart from the cell stack 121 with the plate P1a interposed therebetween. A length of the plate P1a in the Z-axis direction may be greater than that of the plate P2a in the Z-axis direction.

The ribs R1a, R2a, R3a, and R4a may be substantially perpendicular to the Z-axis direction. The ribs R1a, R2a, R3a, and R4a may be spaced apart from each other in the Z-axis direction. The ribs R1a, R2a, R3a and R4a may be interposed between the plates P1a and P2a.The ribs R1a, R2a, R3a, and R4a may be connected to the plates P1a and P2a.The ribs R3a and R4a may be interposed between the ribs R1a and R2a.

Each of the ribs R1a, R2a, R3a, and R4a may include a plurality of slots SLa. A length of each of the plurality of slots SLa in the X-axis direction may be greater than a length thereof in the Y-axis direction. A plurality of slots SLa of each of the ribs R1a, R2a, R3a, and R4a may overlap each other in the Z-axis direction.

There may be an empty space between the plates P1a and P2a and the ribs R1a, R2a, R3a and R4a.Accordingly, the first cross-beam 125a may be reduced in weight, and the energy density of the battery pack 100 may be improved. The plate P1a may be referred to as a first plate, the plate P2a may be referred to as a second plate, the rib R1a may be referred to as a first rib, and the rib R2a may be referred to as a second rib.

The second cross-beam 125b of each of the plurality of battery assemblies 120 may include plates P1b and P2b and ribs R1b, R2b and R3b.The plates P1b and P2b may be substantially perpendicular to the X-axis direction. The plates P1b and P2b may be spaced apart from each other in the X-axis direction. The plate P1b may be in contact with the cell stack 121.The plate P1b may cover a second side 121S2 of the cell stack 121.The second side 121S2 may be opposite to the first side 121S1.The plate P2b may be spaced apart from the cell stack 121 with the plate P1b interposed therebetween. A length of the plate P1b in the Z-axis direction may be greater than that of the plate P2b in the Z-axis direction.

The ribs R1b, R2b, and R3b may be substantially perpendicular to the Z-axis direction. The ribs R1b, R2b, and R3b may be spaced apart from each other in the Z-axis direction. The ribs R1b, R2b and R3b may be interposed between the plates P1b and P2b.The ribs R1b, R2b and R3b may be connected to the plates P1b and P2b.The rib R3b may be interposed between the ribs R1b and R2b.

Each of the ribs R1b, R2b, and R3b may include a plurality of slots SLb. A length of each of the plurality of slots SLb in the X-axis direction may be greater than a length thereof in the Y-axis direction. The plurality of slots SLb of each of the ribs R1b, R2b, and R3b may overlap each other in the Z-axis direction. The plurality of slots SLb of each of the ribs R1b, R2b, and R3b may overlap the plurality of slots SLa of each of the ribs R1a, R2a, R3a, and R4a in the Z-axis direction.

There may be an empty space between the plates P1b and P2b and the ribs R1b, R2b and R3b.Accordingly, the second cross-beam 125b may decrease in weight, and the energy density of the battery pack 100 may increase. The plate P1b may be referred to as a third plate, the plate P2b may be referred to as a fourth plate, the rib R1b may be referred to as a third rib, and the rib R2b may be referred to as a fourth rib.

According to example embodiments, the second cross-beam 125b of each of the plurality of battery assemblies 120 may be coupled to the first cross-beam 125a of one of a plurality of subsequent battery assemblies 120.Thus, a lower portion of the plate P1a may face the plate P2b, an upper portion of the plate P1b may face the plate P2a, and the rib R2a may face the rib R1b.

A distance between the rib R3b and the plate part 111 may be greater than a distance between the rib R2b and the plate part 111.A distance between the rib R1b and the plate part 111 may be greater than a distance between the rib R3b and the plate part 111.A distance between the rib R2a and the plate part 111 may be greater than a distance between the rib R1b and the plate part 111.A distance between the rib R4a and the plate part 111 may be greater than a distance between the rib R2a and the plate part 111.A distance between the rib R3a and the plate part 111 may be greater than a distance between the rib R4a and the plate part 111.A distance between the rib R1a and the plate part 111 may be greater than a distance between the rib R3a and the plate part 111.

According to example embodiments, a thickness of each of the plates P1a, P2a, P1b, and P2b and the ribs R1a, R2a, R3a, R4a, R1b, R2b, and R3b may be about 10 mm or less. According to example embodiments, the first and second cross-beams 125a and 125b may decrease in weight because the thickness of each of the plates P1a, P2a, P1b, and P2b and the ribs R1a, R2a, R3a, R4a, R1b, R2b, and R3b is about 10 mm or less. According to example embodiments, a thickness of each of the plates P1a, P2a, P1b, and P2b and the ribs R1a, R2a, R3a, R4a, R1b, R2b, and R3b may be about 0.5 mm or more. According to example embodiments, the first and second cross-beams 125a and 125b may have sufficient rigidity because the thickness of each of the plates P1a, P2a, P1b, and P2b and the ribs R1a, R2a, R3a, R4a, R1b, R2b, and R3b is about 0.5 mm or more.

A heat insulator 150 may be interposed between the second cross-beam 125b of each of the plurality of battery assemblies 120 and the first cross-beam 125a of each of the plurality of subsequent battery assemblies 120.The second cross-beam 125b of each of the plurality of battery assemblies 120 and the first cross-beam 125a of each of the plurality of subsequent battery assemblies 120 may be spaced apart from each other in the X-axis direction with the heat insulator 150 interposed therebetween. Accordingly, the plurality of battery assemblies 120 may be spaced apart from each other in the X-axis direction with the heat insulator 150 interposed therebetween.

The heat insulator 150 may be in contact with the first cross-beam 125a and the second cross-beam 125b.The heat insulator 150 may be in contact with a lower portion of the plate P1a, the plate P2a, an upper part of the plate P1b, the plate P2b, the rib R1b, and the rib R2a.

The first cross-beam 125a, the second cross-beam 125b, and the heat insulator 150 may form a cross-beam assembly CBA together. The cross-beam assembly CBA may extend in a direction perpendicular to the center beam 130 (i.e., the Y-axis direction).The cross-beam assembly CBA may isolate the cell stacks 121 from each other in the X-axis direction. The cross-beam assembly CBA may be interposed between neighboring cell stacks 121.

The second cross-beam 125b of each of the plurality of battery assemblies 120 and the first cross-beam 125a of the plurality of subsequent battery assemblies 120 may be coupled to each other by mechanical fixing devices such as bolts or the like. The fixing devices may be coupled to the plate part 111 through the plurality of slots SLa of each of the ribs R1a, R2a, R3a, and R4a and the plurality of slots SLb of each of the ribs R1b, R2b, and R3b.Accordingly, the second cross-beam 125b of each of the plurality of battery assemblies 120 and the first cross-beam 125a of the plurality of subsequent battery assemblies 120 may be fixed to each other. The fixing devices may pass through the heat insulator 150.Accordingly, the heat insulator 150 may include a plurality of holes. The plurality of holes of the heat insulator 150 may overlap the slots SLa and SLb.

According to example embodiments, the first cross-beam 125a and the second cross-beam 125b may have different and complementary shapes. The first cross-beam 125a and the second cross-beam 125b of each of the cross-beam assemblies CBA may be engaged with each other.

The first cross-beams 125a of battery assemblies 120 located at opposite ends in the X-axis direction among the plurality of battery assemblies 120 may be coupled to a support on the plate part 111 of the housing 110.The first cross-beam 125a and the support may be fixed by the fixing devices.

The plurality of battery assemblies 120 may be arranged in the X-axis direction and the Y-axis direction. In FIG. 1, the number of battery assemblies 120 arranged in the X-axis direction is three, and the number of battery assemblies 120 arranged in the Y-axis direction is two. Accordingly, the above array of battery assemblies 120 may be referred to as a 3x2 array. The plurality of battery assemblies 120 arranged in an array of MxN may be easily derived by those of ordinary skill in the art, based on the above description. Here, M and N are each an integer of 2 or more.

The center beam 130 may isolate elements on the housing 110 from each other. Accordingly, the center beam 130 may prevent an undesired short circuit from occurring between the plurality of battery assemblies 120 while protecting the plurality of battery assemblies 120.

The center beam 130 may extend between opposite side walls 110S.The center beam 130 may extend in the X-axis direction. The center beam 130 may be in contact with one of the side walls 110S.The center beam 130 may isolate the plurality of battery assemblies 120 from each other. The center beam 130 may be interposed between the plurality of battery assemblies 120.

The plurality of exhaust devices 140 may be coupled to some of the side walls 110S.The side walls 110S may include an exhaust path connected to the plurality of exhaust devices 140.The plurality of exhaust devices 140 may be configured to delay thermal propagation by discharging a high-temperature gas from the inside of the battery pack 100 to the outside when at least one of the plurality of battery assemblies 120 is in a thermal runaway state.

Here, the thermal runaway state of the plurality of battery assemblies 120 is a state in which a change of temperature of the plurality of battery assemblies 120 accelerates the change of temperature, i.e., an uncontrollable positive feedback. The temperature of the plurality of battery assemblies 120 that are in the thermal runaway state sharply increases, and a large amount of high-pressure gas and combustion debris are discharged.

The battery pack 100 may further include electronic components. The electronic components may be on the housing 110.The electronic components may be between the side wall 110S on which the exhaust devices 140 are installed and the plurality of battery assemblies 120.The electronic components may include an electronic device required to drive the battery pack 100.

The electronic components may include, for example, a battery management system (BMS).The BMS may be configured to monitor, balance, and control the battery pack 100.The monitoring of the battery pack 100 may include measuring voltages and currents of certain nodes inside the plurality of battery assemblies 120 and measuring temperatures at set positions in the battery pack 100.The battery pack 100 may include measuring instruments for measuring voltages, currents, and temperatures as described above.

The balancing of the battery pack 100 is an operation of reducing a deviation between the plurality of battery assemblies 120.The controlling of the battery pack 100 includes preventing overcharging, over-discharging, and overcurrent. Through monitoring, balancing, and controlling, the battery pack 100 may be operated under optimal conditions, thereby preventing the lifespan of each of the plurality of battery assemblies 120 from being shortened.

The electronic components may further include a cooling device, a power relay assembly (PRA), a safety plug, etc. The cooling device may include a cooling fan.The cooling fan may circulate air in the battery pack 100 to prevent overheating of each of the plurality of battery assemblies 120.The PRA may be configured to supply or cut off power from a high-voltage battery to an external load (e.g., a motor of a vehicle).The PRA may cut off power supply to an external load (e.g., a motor of a vehicle) to protect the plurality of battery assemblies 120 and an external load (e.g., a motor of a vehicle), when abnormal voltage such as voltage surges occurs.

The battery pack 100 may further include a plurality of bus bars configured to electrically connect the plurality of battery assemblies 120.The plurality of battery assemblies 120 may be connected in series by the plurality of bus bars. Accordingly, the battery pack 100 may be configured to output a high voltage to an external load (e.g., a motor of a vehicle).

The battery pack 100 may further include a lid plate coupled to the side walls 1 10S.The lid plate may cover elements inside the battery pack 100 such as the battery assemblies 120 and electronic components. The lid plate may be fixed to the battery pack 100 by a mechanical coupling means, e.g., a bolt.

### (Second Embodiment)

FIG. 7 illustrates a part corresponding to FIG. 2.Accordingly, a cross-beam assembly CBAa shown in FIG. 7 may replace the cross-beam assembly CBA of FIG. 2.

Referring to FIG. 7, the cross-beam assembly CBAa may not include a heat insulator. Accordingly, there may be an air gap AG between a first cross-beam 125a and a second cross-beam 125b, thereby resulting in a reduction of the weight of the cross-beam assembly CBAa. In addition, the air gap AG between the first cross-beam 125a and the second cross-beam 125b may function as a heat insulator.

### (Third Embodiment)

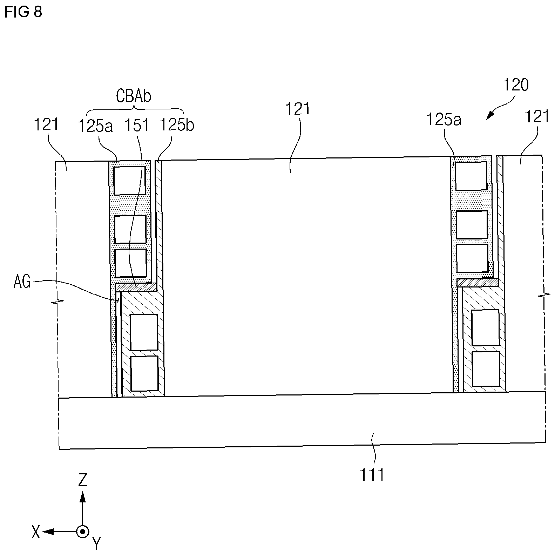

FIG. 8 illustrates a part corresponding to FIG. 2.Accordingly, a cross-beam assembly CBAb shown in FIG. 8 may replace the cross-beam assembly CBA of FIG. 2.

Referring to FIGS. 3, 5 and 8, a heat insulator 151 of the cross beam assembly CBAb may have a smaller size than the heat insulator 150 of FIG. 2.Accordingly, there may be an air gap AG between a first cross-beam 125a and a second cross-beam 125b, thereby resulting in a reduction of the weight of the cross-beam assembly CBAb.

More specifically, the heat insulator 151 may be in contact with the ribs R2a and R1b.The heat insulator151 may be spaced apart from some of plates P1a, P2a, P1b and P2b.The heat insulator151 may be spaced apart from one of the plates P1a, P2a, P1b and P2b.Accordingly, there may be an air gap AG between the plates P1a, P2a, P1b and P2b.

### (Fourth Embodiment)

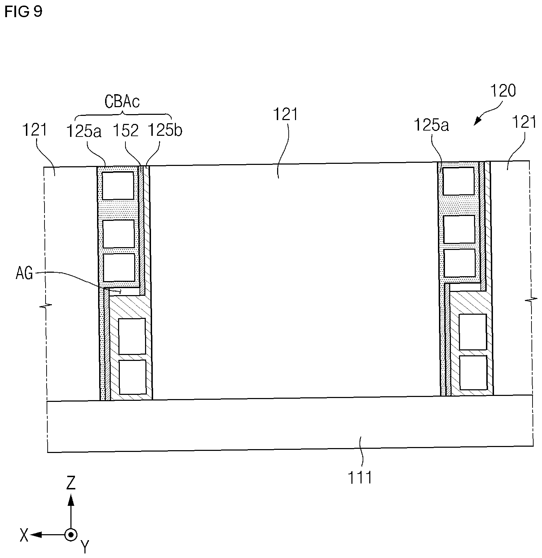

FIG. 9 illustrates a part corresponding to FIG. 2.Accordingly, a cross-beam assembly CBAc shown in FIG. 9 may replace the cross-beam assembly CBA of FIG. 2.

Referring to FIGS. 3, 5 and 9, heat insulators 152 of the cross-beam assembly CBAc may have a smaller size than the heat insulator 150 of FIG. 2.Accordingly, there may be an air gap AG between a first cross-beam 125a and a second cross-beam 125b, thereby resulting in a reduction of the weight of the cross-beam assembly CBAc.

More specifically, the heat insulators 152 may be in contact with the plates P1a, P2a, P1b and P2b and be spaced apart from the rib R2a orR1b.Accordingly, there may be an air gap AG between the ribs R2a and R1b.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery pack comprising:
a housing having a plate part; and
first and second battery assemblies on an upper surface of the plate part of the housing and each including a plurality of battery cells,
wherein each of the first and second battery assemblies comprises a cell stack including the plurality of battery cells and first and second cross-beams spaced apart from each other with the cell stack interposed therebetween,
a shape of the first cross-beam of the second battery assembly is different from and complementary to a shape of the second cross-beam of the first battery assembly,
the first cross-beam of the second battery assembly faces the second cross-beam of the first battery assembly, and
the first cross-beam of the second battery assembly is spaced apart from the second cross-beam of the first battery assembly.

2. The battery pack of claim 1, further comprising a heat insulator between the first cross-beam of the second battery assembly and the second cross-beam of the first battery assembly.

3. The battery pack of claim 1, wherein the first cross-beam of the second battery assembly and the second cross-beam of the first battery assembly together define an air gap therebetween.

4. The battery pack of claim 1, wherein the first cross-beam of each of the first and second battery assemblies comprises:
a first plate covering a first side of the cell stack;
a second plate spaced apart from the cell stack with the first plate interposed therebetween; and
first and second ribs each coupled to the first and second plates and between the first and second plates, and
the second cross-beam of each of the first and second battery assemblies comprises:
a third plate covering a second side of the cell stack, wherein the second side is opposite to the first side;
a fourth plate spaced apart from the cell stack with the third plate interposed therebetween; and
third and fourth ribs coupled to the third and fourth plates and between the third and fourth plates.

5. The battery pack of claim 4, wherein a thickness of each of the first, second, third, and fourth plates and each of the first, second, third, and fourth ribs is 10 mm or less.

6. The battery pack of claim 4, wherein each of the first, second, third, and fourth ribs includes a plurality of slots.

7. The battery pack of claim 6, wherein the plurality of slots of each of the first, second, third, and fourth ribs overlap each other.

8. The battery pack of claim 6, wherein the first battery assembly and the second battery assembly are spaced apart from each other in a first direction, and a length of each of the slots in the first direction is greater than a length thereof in a second direction perpendicular to the first direction.

9. The battery pack of claim 4, further comprising a heat insulator between the first cross-beam of the second battery assembly and the second cross-beam of the first battery assembly, wherein the heat insulator contacts the first, second, third, and fourth plates and the second and third ribs.

10. The battery pack of claim 9, further comprising a plurality of fixing devices that fix the first cross-beam of the second battery assembly to the second cross-beam of the first battery assembly, wherein the plurality of fixing devices pass through the heat insulator.

11. The battery pack of claim 4, further comprising a heat insulator between the first cross-beam of the second battery assembly and the second cross-beam of the first battery assembly, wherein the heat insulator contacts the second and third plates and is spaced apart from one of the second and third ribs.

12. The battery pack of claim 11, wherein the first cross-beam of the second battery assembly and the second cross-beam of the first battery assembly together define an air gap therebetween.

13. The battery pack of claim 4, further comprising a heat insulator between the first cross-beam of the second battery assembly and the second cross-beam of the first battery assembly, wherein the heat insulator is spaced apart from the second or third plate and contacts the second and third ribs.
